**Europäisches Patentamt**

**European Patent Office**

**Office européen des brevets**

(11) Publication number: **0 112 508**
**B1**

# EUROPEAN PATENT SPECIFICATION

(45) Date of publication of patent specification: **03.02.88**

(51) Int. Cl.⁴: **F 02 P 5/04**

(21) Application number: **83111829.4**

(22) Date of filing: **25.11.83**

(54) **Knock control system.**

(30) Priority: **29.11.82 JP 207681/82**

(43) Date of publication of application:
**04.07.84 Bulletin 84/27**

(45) Publication of the grant of the patent:
**03.02.88 Bulletin 88/05**

(84) Designated Contracting States:
**DE FR GB IT SE**

(56) References cited:
**EP-A-0 058 390**
**US-A-3 888 225**

**PATENTS ABSTRACTS OF JAPAN, vol. 7, no.
246(M-253)(1391), 2nd November 1983**

(73) Proprietor: **HITACHI, LTD.**
**6, Kanda Surugadai 4-chome Chiyoda-ku
Tokyo 100 (JP)**

(72) Inventor: **Okado, Terumi**
**Bouda AP 211, 2593 Takaba
Katsuta-shi Ibaraki-ken (JP)**
Inventor: **Suda, Seiji**
**2649-83, Motoyoshida-cho
Mito-shi Ibaraki-ken (JP)**
Inventor: **Sugiura, Noboru**
**1360-27, Kasahara-cho
Mito-shi Ibaraki-ken (JP)**
Inventor: **Yoshinari, Takashi**
**2020-70, Tsuda
Katsuta-shi Ibaraki-ken (JP)**
Inventor: **Minorikawa, Hitoshi**
**935-22, Motoyoshida-cho
Mito-shi Ibaraki-ken (JP)**
Inventor: **Kobayashi, Kazutoshi**
**Bouda AP 242, 2593 Takaba
Katsuta-shi Ibaraki-ken (JP)**
Inventor: **Fujiwara, Hiroshi**
**1608-76, Takaba
Katsuta-shi Ibaraki-ken (JP)**

(74) Representative: **Patentanwälte Beetz sen. -
Beetz jun. Timpe - Siegfried - Schmitt-Fumian
Steinsdorfstrasse 10
D-8000 München 22 (DE)**

## Description

Background of the Invention

The present invention relates to a distributor for use in the electric ignition system of an internal combustion engine, and more particularly to the distributor of an internal combustion engine having a knock control system.

Description of the Prior Art

With the enhancement of engine performance from the viewpoint of energy conservation, the generalization of the installation of a supercharger, etc.; a controlled operation in the vicinity of a limit point close to a knocking causing condition has been required of gasoline engines, especially ones for automobiles. Therefore, the reliable control of knocking (hereinbelow, simply termed "knock") has come into the limelight as an indispensable function.

A system for the control of the knock generally adopted at present is such that, upon detecting peculiar vibrations which develop in the engine with the occurrence of the knock, the ignition timing is retarded thereby to suppress the knock at the initial stage of the occurrence thereof. Such system shall hereinbelow be called the "knock control system".

As understood from the foregoing, the knock control system necessitates a transducer or the so-called knock sensor for sensing the vibrations of the engine and converting them into an electrical signal, and a signal processing circuit for properly processing the electric signal derived by the knock sensor and generating a signal at the occurrence of the knock in the engine or the so-called knock signal.

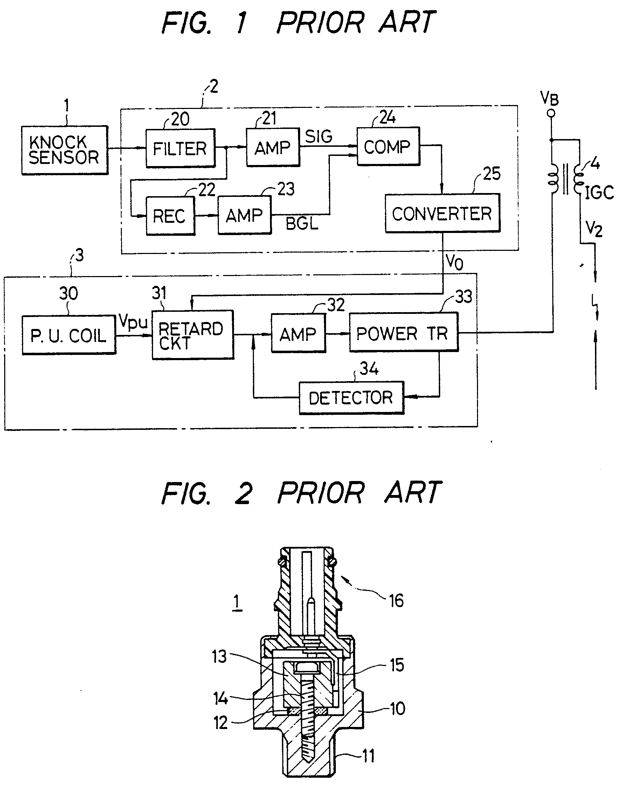

Figure 1 shows an example of an ignition system furnished with the knock control system. The ignition system includes a knock sensor 1, a knock control circuit 2 and an ignition control device (ignitor) 3, and functions to control the supply of current to an ignition coil 4.

The knock sensor 1 is a kind of acceleration detector, and there are the piezoelectric type, the electromagnetic type, etc., among which an example of the piezoelectric type is shown in Figure 2. In this figure, numeral 10 designates the body of the sensor, numeral 11 a fitting threaded portion, numeral 12 a piezoelectric element, numeral 13 a weight, numeral 14 a clamping screw, numeral 15 a lead wire, and numeral 16 a terminal portion. The piezoelectric element 12 is made into a ring-shaped disc by the use of barium titanate ceramic or the like, and is formed with electrodes on the upper and lower surfaces thereof. This piezoelectric element 12 and the ring-shaped weight 13 made of a suitable metal or the like are stacked, and are locked by the screw 14. The lead wire 15 functions to connect the upper electrode of the piezoelectric element 12 to the terminal portion 16.

The knock sensor 1 thus fabricated has its fitting threaded portion 11 rigidly mounted in a female screw hole which is provided in a predetermined position of an engine block.

Accordingly, when the engine vibrates to exert a longitudinal acceleration on the knock sensor 1, a pressure applied to the piezoelectric element 12 under the action of the weight 13 changes, so that an electric signal expressive of the vibrations of the engine block can be derived from the terminal portion 16.

The knock control circuit 2 generates a knock signal $V_0$ by processing the signal delivered from the knock sensor 1. Only a signal of a vibration frequency band peculiar to the knock is discriminated from the output of the knock sensor 1 and then emphasized and derived by means of a filter 20. On one hand, it is amplified to a predetermined level by an amplifier 21 so as to obtain a signal SIG, which is supplied to the comparison input of a comparator 24, while on the other hand, it is averaged by a half-wave rectifier 22 and an amplifier 23 into a signal BGL, which is supplied to the reference input of the comparator 24. Thus, only when the level of the signal SIG has exceeded that of the signal BGL, an output is provided from the comparator 24. When the comparator 24 has produced the output, a knock voltage converter circuit 25 decides the occurrence of the knock in the engine and operates so as to raise the knock signal $V_0$.

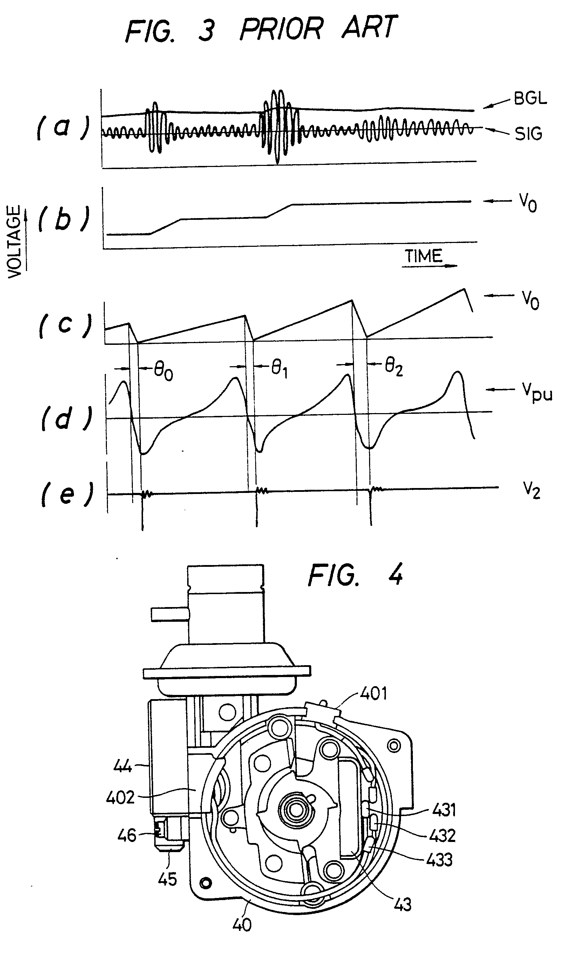

Accordingly, the signals SIG, BGL and the knock signal $V_0$ in or from this knock control circuit become as shown in (a) and (b) in Figure 3, respectively.

The igniter 3 is of the so-called built-in type which is construed unitarily with a pickup coil 30 for detecting the reference crank position of the engine. It is constructed of a phase control circuit (called "retard circuit") 31 which generates a delay signal for retarding the ignition timing from a predetermined point in accordance with the knock signal $V_0$, an amplifier 32, a power transistor 33 which controls the current supply to the ignition coil 4, and a saturation time detector circuit 34 which serves to control the conduction time of the power transistor 33 so as not to exceed a predetermined value. The retard circuit 31 includes a capacitor which is charged and discharged by a constant current charging circuit and a constant current discharging circuit. The timing at which the charge of the capacitor changes over to the discharge thereof is controlled by a signal $V_{pu}$ delivered from the pickup coil 30, while the charging current value of the constant current charging circuit is controlled by the knock signal $V_0$. When the terminal voltage of this capacitor at the discharge thereof has reached a predetermined value, for example, zero, an ignition signal is generated.

As a result, the terminal voltage $V_0$ of the capacitor included in the retard circuit 31, the signal $V_{pu}$ detected by the pickup coil 30 and the secondary voltage $V_2$ of the ignition coil 4 become as shown in (c), (d) and (e) of Figure 3, respectively, and the ignition timings are successively retarded as indicated by $\theta_0$, $\theta_1$ and $\theta_2$ from predetermined points in accordance with the magnitudes of the knock signal $V_o$.

Thus, according to such ignition system furnished with the knock control system, the ignition timing is delayed as soon as the knock has occurred in the engine, and the delay of the timing is gradually increased while the knock is continuing. Owing to this operation, the knock can be effectively suppressed, and the enhancement of the performance of the engine or the installation of the supercharger can be efficiently promoted.

Although, in the above example, the ignitor 3 has been shown as being of the built-in type unitary with the pickup coil 30, it is needless to say that an ignitor having the pickup coil 30 constructed separately from the other circuitry is also well known.

Now, such knock control system requires, as stated before, the knock sensor and the knock control circuit unit for processing the signal produced by the sensor.

In conventional automobile engines etc., the knock sensor has been mounted directly on the engine block, while the knock control circuit unit has been mounted on a proper place within the engine room.

With the prior-art knock control system, therefore, the step of mounting the knock sensor and the knock control circuit unit and the step of wiring them are necessary in case of assembling the engine. Another disadvantage has been that an additional space for mounting them is necessary.

Object of the Invention

An object of the present invention is to eliminate the disadvantages of the prior art described above, and to readily provide a knock control system which mitigates the mounting step and wiring step at the assemblage and which also mitigates the necessity of the additional space.

Summary of the Invention

In order to accomplish the object, the present invention consists in that at least either of a knock sensor and a signal processing circuit unit therefor is mounted on a distributor.

Brief Description of the Drawings

Figure 1 is a block diagram showing an example of a knock control system in a prior art, Figure 2 is a sectional view showing an example of a known piezoelectric knock sensor, and Figure 3 is a waveform diagram for explaining the operation of the prior-art knock control system;

Figure 4 is a top view of a distributor with a cap removed therefrom, in an embodiment of a knock control system according to the present invention, while Figure 5 is a side sectional view thereof;

Figure 6 is a front view showing an embodiment of a knock control circuit unit, Figure 7 is a side view thereof, and Figure 8 is a rear view of a terminal portion thereof;

Figure 9 is a top view showing another embodiment of the distributor in the present invention with a cap removed therefrom, Figure 10 is a side sectional view thereof, and Figure 11 is a side view showing an embodiment of an IC unit; and

Figure 12 is a sectional view showing another embodiment of the distributor in the present invention.

Detailed Description of the Preferred Embodiments

Embodiments of a knock control system according to the present invention will now be described with reference to the drawings.

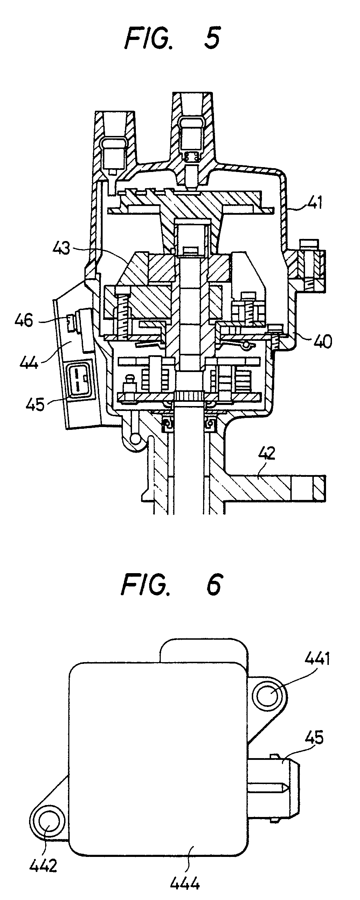

Figures 4 and 5 show an embodiment of a distributor for use in the present invention. Figure 4 is a top view showing the distributor in the state in which a cap is removed, while Figure 5 is a side sectional view. In these figures, numeral 40 designates the body of the distributor, numeral 41 the cap of the distributor, numeral 42 a mounting and fixing base portion which is unitary with the body 40, numeral 43 an ignitor unit, numeral 44 a knock control unit (hereinbelow, termed "knock C/U"), numeral 45 a terminal portion, and numeral 46 a fitting screw.

The details of the knock C/U 44 are as shown in Figures 6, 7 and 8. Numerals 441 and 442 indicate holes for fitting screws, numeral 443 a terminal portion, and numeral 444 a cover.

This distributor is an ordinary distributor which is furnished in the body 40 with a reluctor for an ignitor, a rotor for distributing a high voltage, a centrifugal governor, a vacuum angle advancer, etc. and which has the ignitor unit 43 called, e.g., the full transistor type. It is mounted on an engine block by the base portion 42. Further, the body 40 is provided with a terminal portion 401 for an external power source as well as an ignition coil and besides a terminal portion 402 for the knock C/U 44.

The ignitor unit 43 is provided, in addition to ordinary terminals, with terminals 431, 432 and 433 for connection with the knock C/U 44, these being connected through the terminal portion 402.

The knock C/U 44 is formed by molding, and receives therein the knock control circuit 2 (Figure 1) in the IC implementation. It is provided with the terminal portion 45 for the knock sensor 1, the terminal portion 443 for the ignitor unit 43, and the holes 441, 442 for the fitting screws, and it has the molded cover 444.

This knock C/U 44 is attached to the body 40 of the distributor by the two screws 46 (one of which does not appear in the drawings), and it is connected with the ignitor unit 43 in such a way that the terminal portion 443 is inserted in and coupled with the terminal portion 402. The reason why the three terminals 431, 432 and 433 are disposed between the knock C/U 44 and the ignitor unit 43 in this embodiment is that, besides the power source and the knock signal $V_o$, a signal

expressive of an ignition timing is sent from the ignitor unit 43 to the knock C/U 44. Although omitted in Figure 1, the signal expressive of the ignition timing is required in the knock C/U 44, for the following reason. The signal from the knock sensor 1 is a signal of considerably minute level, whereas noise attendant upon ignition reaches a considerably high level. At the ignition timing, therefore, the signal is masked so as not to receive the ignition noise and so as to reliably detect the signal from the knock sensor 1.

In accordance with this embodiment, accordingly, merely by attaching the distributor to the engine block, the mounting of the knock C/U of the knock control system is automatically completed, and the wiring between the knock C/U and the ignitor unit is dispensed with. The installation of the knock control system is effected merely by mounting the knock sensor and performing the wiring therefrom to the knock C/U, so that the assembling process of the engine can be simplified.

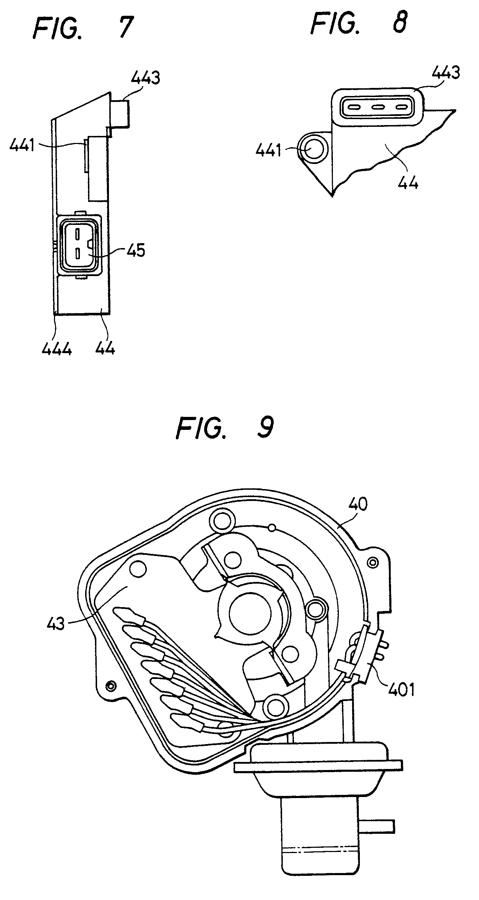

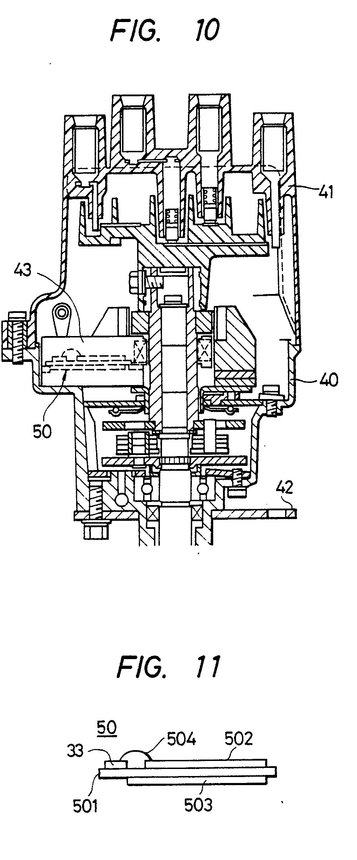

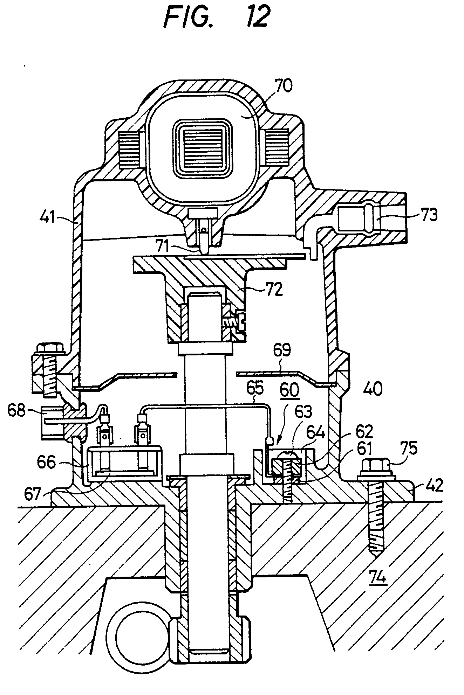

Next, Figures 9 and 10 show another embodiment of the present invention, in which even the knock C/U is built in the ignitor unit 43. In the drawing, numeral 50 indicates an IC unit. As illustrated in detail in Figure 11, it is so constructed that ceramic IC substrates 502 and 503 are disposed on both the surfaces of a metal plate of copper or the like 501 which serves both as a shield plate and as a thermal diffusion plate, and that a power transistor 33 is further comprised. The IC substrate 502 and the power transistor 33 are connected by wire bonding at 504. The other portions are the same as in the embodiment shown in Figures 4 and 5, except mere differences based on the specifications of the distributor, etc.

The ceramic IC substrate 502 mounted on one surface of the metal plate 501 is formed with, for example, the retard circuit 31, amplifier 32 and saturation time detector circuit 34 of the ignitor 3 shown in Figure 1, while the ceramic IC substrate 503 mounted on the other surface is formed with, for example, the knock control circuit 2 in Figure 1. The power transistor 33 disposed on the one surface of the metal plate 501 is, of course, the same as the power transistor 33 included in the ignitor 3 in Figure 1.

Thus, according to this embodiment, at the point of time at which, in assembling the distributor, the ignitor unit 43 has been mounted in the body 40 thereof, the mounting of the knock C/U and the wiring between this knock C/U and the ignitor circuit are simultaneously completed. Merely by attaching the distributor body to the engine block by means of the base portion 42, the mounting and wiring of the knock C/U can be automatically completed.

According to this embodiment, the job of mounting the knock C/U on the body 40 in the embodiment of Figures 4 and 5 is dispensed with, and besides, the terminal portions 45, 402 and the terminals 431, 432, 433 and also the wiring between them are dispensed with, so that great curtailment in cost, and increase in reliability owing to the reduced number of constituents can be attained.

Figure 12 shows still another embodiment of the present invention, in which numeral 60 denotes a knock sensor, numeral 61 a piezoelectric element, numeral 62 a weight, numeral 63 a fitting screw, numeral 64 a recess, numeral 65 a lead wire, numeral 66 a knock C/U, numeral 67 an IC substrate, numeral 68 a terminal portion, numeral 69 a shield plate, numeral 70 an ignition coil, numeral 71 a carbon chip, numeral 72 a rotor, numeral 73 a high voltage terminal, numeral 74 an engine block, and numeral 75 an anchor bolt.

The knock sensor 60 is a piezoelectric type one which is similar to the well-known knock sensor elucidated in Figure 2. However, it is not fabricated into the unit assembled in the body 10 as in the knock sensor of Figure 2, but it is so constructed that the piezoelectric element 61 and the weight 62 which are ring-shaped discs are directly mounted by the fitting screw 63 in the recess 64 which is formed in the inner upper surface of the base portion 42 of the distributor body 40. In the recess 64, a gel-like filler for preventing moisture may well be inserted after assembling the knock sensor.

The knock C/U 66 is similarly disposed on the inner upper surface of the base portion 42 in the vicinity of the knock sensor 60, and it is so mounted that the IC substrate 67 touches the upper surface of the base portion 42 in parallel therewith. This knock C/U 66 is connected with the knock sensor 60 through the short lead wire 65, and is further connected with an external power source etc. through the terminal portion 68.

The shield plate 69 is disposed so as to substantially bisect the interior of the distributor into upper and lower parts, thereby functioning to keep in the shielded state the inner lower part of the distributor in which the knock sensor 60, the knock C/U 66, etc. are disposed.

The ignition coil 70 is of the so-called closed magnetic path type which is furnished with a magnetic path similar to that of a shell type transformer. It is unitarily molded in the upper part of the cap 41 of the distributor, and its high voltage output is directly connected to the carbon chip 71 and is distributed from the rotor 72 to the high voltage terminal 73. The distributor with the ignition coil made unitary in this manner has been known.

The distributor in which the knock sensor 60 and the knock C/U 66 have thus been assembled, is mounted on the engine by the anchor bolt 75 in such a manner that the base portion 42 lies in direct touch with the engine block 74.

Accordingly, vibrations developing in the engine are transmitted from the engine block 74 to the base portion 42 of the distributor without any appreciable change, whereupon they are detected by the knock sensor 60. When knocking has arisen in the engine, a signal output containing an electric signal based thereon is produced from the knock sensor 60, and a knock signal delivered from the knock C/U 66 is provided from the terminal portion 68. Thus, the knock control can be performed. This embodiment of Figure 12 concerns an application to the engine of the type in which an ignition system is digitally controlled by a microcomputer or the like, so that the knock signal is taken out of the distributor. However, both the ignitor and the knock C/U may well be built in the distributor as in the embodiment of Figures 9 and 10. In this case, the knock signal from the knock C/U 66 is directly used for the control of an ignition time inside the distributor and need not be taken outside. In case of performance for an ignition system of the so-called analog type employing an ignitor, equipment such as a centrifugal governor and a vacuum angle advancer are, of course, disposed as needed though not shown in Figure 12.

According to this embodiment shown in Figure 12, the knock control system is wholly built in the distributor. Therefore, the installation of the knock control system is finished merely by mounting the distributor on the engine block at the assemblage of the engine, and any other job is not required for the installation of the knock control system, so that sharp improvements can be made in the aspects of cost and space.

In addition, the knock sensor 60 and the knock C/U 66, including the lead wire 65 which connects them, are put in the substantially perfect shielded state owing to the distributor body 40 as well as the shield plate 69, so that noise is hardly feared to mix into the output of the knock sensor 60. Further, the lead wire 65 may be very short and need not be a shielding wire or the like, so that the level fluctuation or S/N (signal-to-noise ratio) lowering of the signal expressive of the knock vibrations as produced by the knock sensor 60 is scarcely involved, and the detecting operation can be carried out sufficiently reliably.

Moreover, the knock sensor 60 need not be constructed into the unit as shown in Figure 2 but may be the mere assembly consisting of the piezoelectric element 61 and the weight 62, so that a still lower cost is permitted.

Since this embodiment is of the type having the built-in ignition coil, most of the ignition system including the knock control system can be completed merely by mounting the distributor, and sharp simplification of the engine assembling process and reduction in the space can be attained. This is especially remarkable in the case of the analog ignition system.

Besides, with this embodiment, the conduction of heat from the IC substrate 67 of the knock C/U 66 to the base portion 42 becomes good, and a great effect of heat radiation can be expected, so that the temperature rise of the IC substrate 67 can be suppressed, and a high reliability can be attained.

Furthermore, with this embodiment, the output signal from the knock sensor 60 is supplied to the knock C/U 66 and need not be directly taken outside, so that the terminal portion 68 can be provided with a through-capacitor type terminal conductive portion. This measure can perfectly prevent the operation of the knock control system from being disturbed by external noise, an electric wave trouble, etc.

In any of the prior-art knock control system and the embodiments shown in Figures 4 to 10, the mounting position of the knock sensor on the engine block can be determined considerably freely, and the knock sensor can be attached to a position at which the vibrations due to the knock from cylinders are transmitted to the knock sensor at substantially equal intensities among the respective cylinders. In contrast, with the embodiment of Figure 12, the mounting position of the knock sensor is stipulated by the mounting position of the distributor. In some cases, therefore, the knock sensor might fail to be situated at the best position for detecting the knock vibrations of the respective cylinders. Since, however, the engine block and the respective cylinders are made unitary in most cases, a difference problematic in practical use will seldom develop except for extreme cases whichever position of the engine block the knock sensor is disposed at. In addition, if necessary, the processing of the signals from the knock sensor may be changed near the ignition timings of the respective cylinders. Such signal processing is very easy especially in an engine control system employing a microcomputer and is slightly attended with increase in cost. Therefore, this measure is not feared to reduce or cancel the effectiveness of the embodiment shown in Figure 12.

Regarding this embodiment of Figure 12, the knock C/U may well be mounted outside with only the knock sensor 60 left in the interior. Needless to say, the knock sensor 60 may well be replaced with the knock sensor in the form of the unit as shown in Figure 2.

As set forth above, according to the present invention, the installation of the knock control system on the engine can be completely partly or almost wholly by the mounting of the distributor. Therefore, the invention can readily provide the knock control system which eliminates the disadvantages of the prior art or can reduce a cost necessary for the assemblage of the engine and a space necessary for the attachment of the engine, which assures an operation of high reliability and which can sharply curtail the cost of constituent equipment.

**Claims**

1. In a distributor of a type having a fixing base portion (40) at a part of a housing thereof, the distributor being installed on an engine block by the fixing base portion (40) a knock control system consisting of a transducer (1) for detecting vibrations of an engine and converting them into an electric signal and a signal processing circuit unit (44) for delivering a signal expressive of occurrence of knock on the basis of the signal from said transducer characterized in that at least either of said transducer (1) and said processing circuit unit (44) is mounted on a part of the housing (40, 41) of said distributor.

2. A knock control system according to claim 1, wherein at least either of said transducer (1) and said signal processing circuit unit (44) is mounted inside said fixing base portion (40).

3. A knock control system according to claim 1 or 2, wherein said signal processing circuit unit (44) is constructed unitarily with an ignition control circuit unit (43).

4. A knock control according to any of claims 1 to 3, wherein said distributor is a distributor having an ignition coil (70) unitary therewith.

## Patentansprüche

1. Klopfregelsystem für einen Verteiler, der an einem Abschnitt seines Gehäuses einen Befestigungsbasisteil (40) aufweist und mit diesem an einem Motorblock montiert ist, wobei das Klopfregelsystem einen Meßwertaufnehmer (1), der Vibrationen eines Motors aufnimmt und sie in ein elektrisches Signal umsetzt, sowie eine Signalverarbeitungsschaltungseinheit (44) aufweist, die ein das Auftreten von Klopfen bezeichnendes Signal auf der Grundlage des Ausgangssignals des Meßwertaufnehmers liefert, dadurch gekennzeichnet, daß wenigstens entweder der Meßwertaufnehmer (1) oder die Verarbeitungsschaltungseinheit (44) an einem Teil des Gehäuses (40, 41) des Verteilers angeordnet ist.

2. Klopfregelsystem nach Anspruch 1, wobei wenigstens entweder der Meßwertaufnehmer (1) oder die Signalverarbeitungsschaltungseinheit (44) innerhalb des Befestigungsbasisteils (40) angeordnet ist.

3. Klopfregelsystem nach Anspruch 1 oder 2, wobei die Signalverarbeitungsschaltungseinheit (44) als Einheit mit einer Zündsteuerungsschaltungseinheit (43) ausgebildet ist.

4. Klopfregelsystem nach einem der Ansprüche 1—3, wobei der Verteiler eine damit einheitliche Zündspule (70) aufweist.

## Revendications

1. Dans un distributeur du type comportant un élément de base de fixation (40) dans une partie d'un carter de ce distributeur, ce dernier étant monté sur un bloc-cylindres au moyen de l'élément de base de fixation (40), un système de commande du cognement constitué par un transducteur (1) servant à détecter les vibrations d'un moteur et les convertir en un signal électrique et une unité de circuit de traitement de signal (44) servant à délivrer un signal indiquant l'apparition d'un cognement sur la base du signal délivré par ledit transducteur, caractérisé en ce qu'au moins l'un ou l'autre dudit transducteur (1) et de ladite unité de circuit de traitement (44) est monté sur une partie du carter (40, 41) dudit distributeur.

2. Système de commande du cognement selon la revendication 1, dans lequel au moins l'un ou l'autre dudit transducteur (1) et de ladite unité de circuit de traitement de signal (44) est monté à l'intérieur dudit élément de base de fixation (40). ·

3. Système de commande du cognement selon la revendication 1 ou 2, dans lequel ladite unité de circuit de traitement de signal (44) est réalisée de manière à être solidaire d'un unité de circuit de commande d'allumage (43).

4. Système de commande du cognement selon l'une quelconque des revendications 1 à 3, dans lequel ledit distributeur est un distributeur dont est solidaire une bobine d'allumage (70).

## FIG. 1 PRIOR ART

KNOCK SENSOR 1

FILTER 20 → AMP 21 → SIG → COMP 24

REC 22 → AMP 23 → BGL

CONVERTER 25

2

V_B

IGC 4

V_2

V_0

P. U. COIL 30 → Vpu → RETARD CKT 31 → AMP 32 → POWER TR 33

DETECTOR 34

3

## FIG. 2 PRIOR ART

1

13

14

12

15

10

11

16

## FIG. 3 PRIOR ART

( a )  BGL / SIG

( b )  $V_0$ — VOLTAGE / TIME

( c )  $V_0$

( d )  $\theta_0$ $\theta_1$ $\theta_2$ $V_{pu}$

( e )  $V_2$

## FIG. 4

FIG. 5

FIG. 6

FIG. 7

FIG. 8

FIG. 9

# FIG. 10

41

43

50

40

42

# FIG. 11

33    504    502

50

501    503

## FIG. 12